# EUROPEAN PATENT SPECIFICATION

(11) **EP 2 220 618 B1**
(45) Date of publication and mention of the grant of the patent: **09.01.2019**
(21) Application number: 08850671.2
(22) Date of filing: 04.11.2008
(51) Int. Cl.: G06T 7/246

(54) **APPARATUS FOR DETERMINING A PARAMETER OF A MOVING OBJECT**
VORRICHTUNG ZUM BESTIMMEN EINES PARAMETERS EINES BEWEGTEN OBJEKTS
APPAREIL PERMETTANT DE DÉTERMINER UN PARAMÈTRE D'UN OBJET MOBILE

(30) Priority: 12.11.2007 EP 07120487
(43) Date of publication of application: 25.08.2010
(73) Proprietor: Koninklijke Philips N.V., 5656 AE Eindhoven (NL); Philips Intellectual Property & Standards GmbH, 20099 Hamburg (DE)
(72) Inventor: GRASS, Michael, NL-5656 AE Eindhoven (NL); ZIEGLER, Andy, NL-5656 AE Eindhoven (NL)
(74) Representative: van Velzen, Maaike Mathilde
(86) International application number: PCT/IB2008/054573
(87) International publication number: WO 2009/063352

(56) References cited:
- US-B1- 6 289 135
- HAUTVAST ET AL: "Automatic Contour Propagation in Cine Cardiac Magnetic Resonance Images" IEEE TRANSACTIONS ON MEDICAL IMAGING, IEEE SERVICE CENTER, PISCATAWAY, NJ, US, vol. 25, no. 11, 1 November 2006 (2006-11-01), pages 1472-1482, XP011149829 ISSN: 0278-0062
- MARTIN H K HOFFMANN ET AL: "Automatic determination of minimal cardiac motion phases for computed tomography imaging: initial experience" EUROPEAN RADIOLOGY, SPRINGER, BERLIN, DE, vol. 16, no. 2, 1 February 2006 (2006-02-01), pages 365-373, XP019336217 ISSN: 1432-1084

## Description

### FIELD OF THE INVENTION

The present invention relates to an apparatus, a method and a computer program for determining a parameter of a moving object.

### BACKGROUND OF THE INVENTION

The article "Automatic Contour Propagation in Cine Cardiac Magnetic Resonance Images", G. Hautvast et al., IEEE Transactions on Medical Imaging, volume 25, number 11, pages 1472 to 1482, 2006 discloses a method for automatic contour propagation in cine cardiac magnetic resonance images. The method consists of an active contour model that tries to maintain a constant contour environment by matching gray values in profiles perpendicular to the contour. Consequently, the contours should maintain a constant position with respect to neighboring anatomical structures, such that the resulting contours reflect the preferences of the user. The accuracy of the propagation result is influenced by several parameters. Since the optimal setting of these parameters is application dependent, full factorial experiments are used to optimize the parameter setting. The method is applied to cine cardiac magnetic resonance image sequences from the long axis two-chamber view, the long axis four-chamber view, and the short axis view.

US 6,289,135 B1 discloses an electronic processing device that receives sets of image data representing respectively sequential three-dimensional digital images of the same region. The device comprises means capable of defining a three-dimensional shape of interest on the basis of at least one of the sets of image data, and of extracting from each set image data representing characteristic points of the shape of interest. Processing means are provided for establishing on the basis of the image data of the contours a spatial-temporal planispheric transformation making it possible to pass from characteristic points extracted from one image to the characteristic points extracted from another image of the sequence. Means for displaying are provided for displaying selected motion data derived from the parameters of the transformation.

It is also known to acquire a cardiac computed tomography (CT) data set and to reconstruct a spatially and temporally dependent cardiac image data set from the acquired cardiac CT data set. A multi-surface triangular model is adapted to the cardiac image data set and a rest phase of the heart is determined from the movement of a predefined part of a wall of the multi-surface triangular model.

This latter prior art has the disadvantage that the part of the wall, from which the rest phase is determined, is predefined. Furthermore, the determination of a parameter is limited to the determination of a rest phase of the heart. But, generally different hearts have different anatomic structures and different pathologies. In addition, different users have generally different working styles and prefer to have determined different parameters related to different parts of the heart. Since in the prior art the variability is limited, the apparatus for determining a parameter of a moving object cannot cope with all possible different combinations of anatomic structures, pathologies and user preferences.

It is therefore an object of the present invention to provide an apparatus for determining a parameter of a moving object, wherein the variability is improved.

In a first aspect of the present invention an apparatus for determining a parameter of a moving object is provided, wherein the apparatus comprises:
- an adaptive model providing unit for providing an adaptive model of the object,
- a user interface for allowing a user to define a region of the adaptive model,
- an image data set providing unit for providing a spatially and temporally dependent image data set of the moving object,
- an adaptation unit for adapting at least a defined region of the adaptive model to the spatially and temporally dependent image data set for determining a spatially and temporally dependence of the defined region,
- a parameter determining unit for determining the parameter of the moving object depending on the spatially and temporally dependence of the defined region.

The invention is based on the idea that different structures and conditions of an object and different user preferences are mainly related to certain regions on the moving object and that the definition of a region of the adaptive model can easily defined by a user using, for example, a graphical user interface. Thus, by allowing a user to define a region of the adaptive model by the user interface, the determination of a parameter of the object can easily be adapted to different structures and conditions of the object and to different user preferences, i.e. the variability can easily be improved.

The adaptive model is, for example, a model of a heart, if a parameter of a heart has to be determined. The adaptive model can be a model of the complete moving object or a model of only a part of the moving object. An adaptive model of the heart is, for example, the multi-surface triangular model disclosed in J. von Berg et al. , "Multi-surface Cardiac Modelling, Segmentation, and Tracking", in A.F. Frangi, P.I. Radeva, A. Santos, and M. Hernandez, editors, LNCS 3504, Functional Imaging and Modelling of the Heart, pages 1-11, Springer Verlag, 2005. The parameter determining unit is, for example, adapted for determining the movement of the defined region, in particular a substantially stationary phase of the defined region. In particular, the parameter determining unit can be adapted to determine the best phase point of the movement of the object in spatially resolved motion maps, wherein the best phase point is preferentially a point in time or time interval, in which the object moves in the defined region less than in other regions of the object.

For example, in cardiac imaging, CT or other modalities, the best phase point describes the time point during the cardiac cycle, when the heart is resting. Usually (at lower heart rates), this time point is located between 50% and 90% of the RR interval, the so-called diastolic area, but in general there are two to three different best phase points in a patients RR interval. They are located in the diastole, at the end systole and for some patients a resting phase is visible after contraction of the atria. Due to varying heart rate, pathologic electric excitation patterns or other reasons their relative position may vary strongly.

As a motion map preferentially the spatial and temporal variation of the moving strength is defined. For the example of cardiac imaging, a preferred motion map is described in Manzke et al., "Anatomic phase determination for retrospectively gated cardiac CT" in Med. Phys. 31 (12) 2004, pp. 3345-3362.

In a further preferred embodiment, the parameter determining unit can be adapted for determining the intensity variation of gray values inside the defined region of the model, which has preferentially been propagated through the spatially and temporally dependent data set, as a parameter. The parameter determining unit can also be adapted for determining the variability of the motion if data sets have been acquired across a multitude of moving cycles in the case of periodic moving objects, for instance across a multitude of cardiac cycles in the case of a heart, or for non-periodic moving objects - along the time axis.

It is preferred that the adaptive model providing unit is adapted for providing several adaptive models, on which different regions are defined, that the user interface is adapted for allowing a user to define a region of the adaptive model by allowing a user to select at least one of the several adaptive models. This allows a user to define a region of the adaptive model simply by selecting at least one of the several adaptive models, wherein the definition of a region is simplified.

In a preferred embodiment the several adaptive models, on which different regions are defined, are assigned to several conditions, wherein the user interface is adapted for allowing a user to define a region of the adaptive model by allowing a user to select one of the several conditions.

Different conditions are, for example, in the case of the moving object being a human organ, like the heart, different structures or pathologies of the moving object. Different structures or pathologies of a human organ can, for example, be retrieved from the image data set or other dedicated information known in the art like information from medical investigations like an electrocardiogram. If the condition is known, a user can easily define a region on the moving object by selecting the present condition, without directly defining a region on the object.

For example, for the majority of patients the areas of the heart muscle provided by blood through the different coronary arteries are comparable. However, there can be different geometric distributions, i.e. conditions, of the coronaries on the heart muscle as, for example, the so-called left-ventricular blood supply type or other variations of the hearts anatomy. If such an anomalous geometric distribution is known or expected, the defined region can be a region of the heart model which corresponds to the region close to the coronaries. A certain condition can also be an anomaly of the shape of the left atrium and its connection to the pulmonary veins. If a condition is related to a certain region of the model, preferentially the user can define the certain region by selecting the corresponding condition.

The user interface is preferentially adapted for allowing a user to define a region of an adaptive model and to store the adaptive model together with the defined region in the adaptive model providing unit. This allows a user to generate adaptive models, on which desired regions have already been defined, and to select in a further step an adaptive model, on which a region has already been defined, in order to define a region on the adaptive model in a certain condition. Thus, a user can generate a set of adaptive models, wherein on each adaptive model another region has been defined.

It is further preferred that the user interface is adapted for allowing a user to assign a condition to an adaptive model, on which a region has been defined, wherein the adaptive model providing unit is adapted for storing the assigned condition. This allows a user to generate a set of adaptive models, wherein the adaptive models are assigned to different conditions.

In a preferred embodiment, the adaptation unit is adapted for adapting the whole adaptive model to the spatially and temporally dependent image data set. Since, if the whole adaptive model is used for adapting the model to the image data set, a lot of data are available for the adaptation process, the adaptation and, thus, the determination of the parameter is improved.

It is preferred that the adaptation unit is adapted for initially adapting at a point in time more than the defined region to the spatially and temporally dependent image data set and for adapting for a point in time of further points in time starting with an adaptive model, which has been adapted for a temporally adjacent point in time, only the defined region to the spatially and temporally dependent image data set. Since for the adaptation for a point in time of the further points in time only the defined region is adapted to the spatially and temporally dependent image data set, the computational costs and the time of adaptation are reduced. Furthermore, since initially at a point in time more than the defined region is adapted to the spatially and temporally dependent image data set, in particular, since preferentially initially at a point in time the whole adaptive model is adapted to the spatially and temporally dependent image data set, the quality of the initial adaptation is improved.

It is also preferred that the resolution, in particular the spatial resolution, of the adaptive model is larger in the defined region than in the remaining part of the adaptive model. Since the resolution of the adaptive model is larger in the defined region than in the remaining part of the adaptive model, the parameter, which is determined in dependence of the defined region, can be determined with high quality, while the computational costs and the time of adaptation are reduced, because the remaining part of the adaptive model has a smaller resolution.

In a further aspect of the present invention, a method for determining a parameter of a moving object is presented, wherein the method comprises following steps:
- providing an adaptive model of the object by an adaptive model providing unit,
- providing a user interface for allowing a user to define a region of the adaptive model,
- providing a spatially and temporally dependent image data set of the moving object by an image data set providing unit,
- adapting at least a defined region of the adaptive model to the spatially and temporally dependent image data set for determining a spatially and temporally dependence of the defined region by an adaptation unit,
- determining the parameter of the moving object depending on the spatially and temporally dependence of the defined region by a parameter determining unit.

In a further aspect of the present invention a computer program for determining a parameter of a moving object is presented, wherein the computer program comprises program code means for causing an apparatus as defined in claim 1 to carry out the steps of the method as defined in claim 9, when the computer program is run on a computer controlling the apparatus.

It shall be understood that the apparatus of claim 1, the method of claim 9 and the computer program of claim 10 have similar and/or identical preferred embodiments as defined in the dependent claims.

### BRIEF DESCRIPTION OF THE DRAWINGS

These and other aspects of the invention will be apparent from and elucidated with reference to the embodiments described hereinafter. In the following drawings
Fig. 1 shows schematically and exemplarily an embodiment of an apparatus for determining a parameter of a moving object,
Fig. 2 shows schematically and exemplarily an embodiment of an image data set providing unit,
Fig. 3 shows exemplarily a flow chart of a method for determining a parameter of a moving object, and
Fig. 4 shows exemplarily a flow chart of generating a set of adaptive models having defined regions.

### DETAILED DESCRIPTION OF EMBODIMENTS

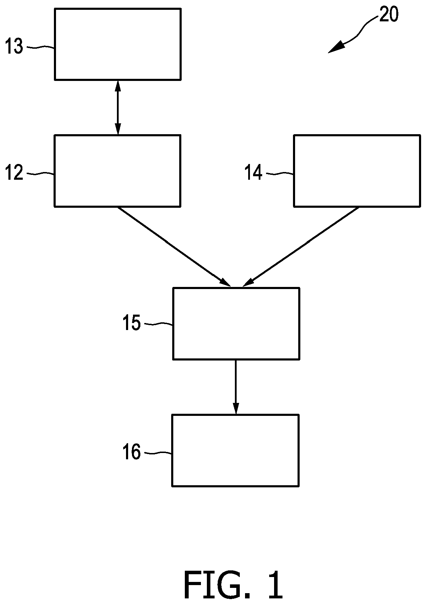

Fig. 1 shows schematically and exemplarily an embodiment of an apparatus for determining a parameter of a moving object in accordance with the invention. The apparatus 20 comprises an adaptive model providing unit 12 for providing an adaptive model of the object and a user interface 13 for allowing a user to define the region of the adaptive model. The apparatus 20 comprises further an image data set providing unit 14 for providing a spatially and temporally dependent image data set of the moving object and an adaptation unit 15 connected to the adaptive providing unit 12 and the image data set providing unit 14 for adapting at least the defined region of the adaptive model to the spatially and temporally dependent image data set for determining a spatially and temporally dependence of the defined region. The apparatus 20 further comprises a parameter determining unit 16, which is connected to the adaptation unit 15, for determining the parameter of the moving object depending on the spatially and temporally dependence of the defined region.

The adaptive model providing unit provides at least one adaptive model, which corresponds to the moving object. The moving object is, for example, a human organ, like a human heart. The adaptive model is preferentially an adaptive shape model, in particular of the heart, wherein the surface of the adaptive shape model is preferentially constructed of triangles. The adaptive model is preferentially the model disclosed in the article "Multi-surface cardiac modelling, segmentation, and tracking", J. von Berg and C. Lorenz,, in A. F. Frangi, P. I. Radeva, A. Santos, and M. Hernandez, editors, LNCS 3504, Functional Imaging and Modelling of the Heart, pages 1-11, Springer-Verlag, 2005. The adaptive shape model can also be a model of another object, like thorax and lung models, vertebra models or aneurysm models. The adaptive model can also be a whole body model, which allows to analyze not only parts of the human anatomy, but also the complete system or user defined parts of the complete system. Furthermore, the adaptive model can also be a volume model, which does not only show the surface of the object.

The adaptive model providing unit 12 is preferentially adapted for providing several adaptive models, which have the same structure, but on which different regions are defined, i.e. preferentially the only differences between the several adaptive models are the different defined regions. In a preferred embodiment, the adaptive model providing unit 12 provides several adaptive models of a human heart, on which different regions are defined, i.e. e.g. on which different triangles on the surface are labeled. For example, a region of the model related to a heart chamber can be defined for determining a parameter, like the best phase point, related to this heart chamber, or a region, which is, preferentially statistically, close to a coronary artery can be defined for determining a parameter, like the best phase point, related to the defined region and/or related to the coronary artery. The defined regions do not have to be surface areas. If a volume model is used, volume regions of the model can be defined. For example, if the model is a heart, a region of the myocardium could be defined, for example marked, for determining a parameter of the myocardium, in particular the best phase point of the myocardium or another parameter related to the temporal behavior of the myocardium.

The several adaptive models provided by the adaptive model providing unit 12 are preferentially assigned to different conditions, for example, to different pathologies. Preferentially, a condition is or is related to a pathology of the object, if the object is a living object like the human heart or another organ. But, a condition can be any condition related to the object, which can also be a technical object. For example, the condition can be the age of the object or the anatomical structure. The different conditions are related to certain regions of the object. For example, if it is known that a certain part of an technical object is known as a wear part, after a certain time of using the technical object, i.e. a certain condition, the defined region can be a region of the model which corresponds to the wear part.

The user interface 13 comprises preferentially a display unit, on which an adaptive model provided by the adaptive model providing unit 12 is displayed and an input unit for allowing a user to define a region on the displayed adaptive model. The input unit comprises preferentially a mouse and a mouse pointer for allowing a user to define a region of the adaptive model displayed on the display unit. For example, a region of the adaptive model can be defined by selecting one or a group of triangles of the triangles, which constitute the adaptive model, by using the mouse pointer or a keyboard.

The user interface 13 is preferentially adapted such that a user can define regions on several adaptive models, which can be stored in the adaptive model providing unit 12. Thus, the user interface 13 and the adaptive model providing unit 12 are adapted such that a user can generate a set of adaptive models, on which different regions are defined. If such a set of several adaptive objects is stored in the adaptive model providing unit 12, a user can select a desired stored adaptive model by using the user interface 13 and, thus, define in this way a region of the adaptive model. The several models stored in the adaptive model providing unit 12 can have the same structure and only be distinguished by the different defined regions, or, alternatively or in addition, adaptive models having another structure, on which the same or other regions are defined, can be stored in the adaptive model providing unit 12.

The user interface 13 is adapted for allowing a user to assign a condition to an adaptive model, on which a region has been defined, wherein the adaptive model providing unit 12 is adapted for storing the assigned condition. This assignment can be performed, for example, by entering a condition, for example by using the keyboard into the user interface 13, which corresponds to the adaptive model with the defined region displayed on the display unit. The conditions are preferentially pathologies, which are related to certain regions on a human heart, if the moving object is a human heart. Thus, a user can generate a set of adaptive models having different regions defined on them, wherein to at least one adaptive model, on which a region has been defined, a condition, i.e. preferentially a pathology, has been assigned. If such a set of adaptive models, on which regions are defined and to which conditions, in particular pathologies, have been assigned, is stored in the adaptive model providing unit 12, a user who knows or believes to know the condition, i.e. preferentially the pathology, can define a region on the adaptive model by selecting the adaptive model having a region defined on it, which corresponds to the present condition. This can easily be performed by selecting the respective condition. A pathology can, for example, be known from an electrocardiogram or other medical investigations.

The image data set providing unit 14 is, in this embodiment, a computed tomography system, which generates a computed tomography image and which will be described in more detail further below. In other embodiments, the image data set providing unit can be, for example, a storage unit, in which a spatially and temporally dependent image data set of the moving object is stored. The image data set providing unit can also be a computer, which reconstructs a spatially and temporally dependent image data set of the moving object depending on acquired data, which have been acquired by an imaging system. This imaging system does not have to be a computed tomography system. It can also be any other imaging system, for example, a magnetic resonance imaging system, an ultrasound imaging system or a nuclear imaging system.

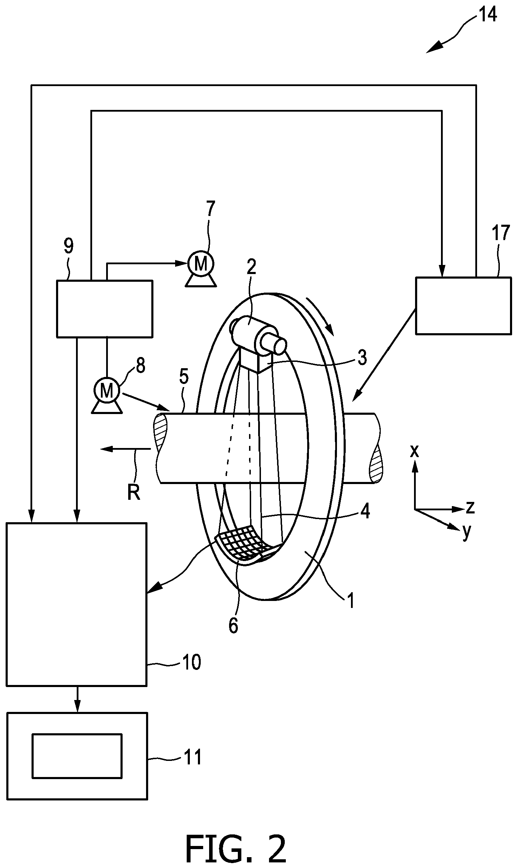

The image data set providing unit 14 used in this embodiment is schematically shown in Fig. 2.

The image data set providing unit 14 schematically shown in Fig. 2 is a computed tomography apparatus. The computed tomography apparatus includes a gantry 1 which is capable of rotation about a rotational axis R which extends parallel to the z direction. A radiation source 2, which is, in this embodiment, an X-ray tube, is mounted on the gantry 1. The radiation source 2 is provided with a collimator 3, which forms, in this embodiment, a conical radiation beam 4 from the radiation generated by the radiation source 2. The radiation traverses an object (not shown), such as a patient, in a region of interest in an examination zone 5 which is, in this embodiment, cylindrical. After having traversed the examination zone 5 the radiation beam 4 is incident on a detection device 6, which comprises a two-dimensional detection surface. In other embodiments, the radiation beam can have another shape, for example, a fan shape. Furthermore, in other embodiments the detection device 6 is formed such that it corresponds to the respective shape of the radiation beam. For example, if the radiation beam is a fan beam, the detection device comprises preferentially a one-dimensional detection surface, which corresponds to the fan shape. The detection device 6 is, in this embodiment, a non-energy-resolving detection device. In other embodiments, the detection device can be energy resolving, for example, in order to allow a spectral reconstruction of the examination zone by using the acquired data.

The computed tomography apparatus comprises a moving unit having two motors 7, 8. The gantry 1 is driven at a preferably constant but adjustable angular speed by the motor 7. A motor 8 is provided for displacing the object, for example, a patient, who is arranged on a patient table in the examination zone 5, parallel to the direction of the rotational axis R or the z axis. These motors 7, 8 are controlled by control unit 9, for instance, such that the radiation source 2 and the examination zone 5 and, thus, a region of interest within the examination zone 5 move relative to each other along a helical trajectory. However, it is also possible that the object or the examination zone 5 is not moved, but that only the radiation source 2 is rotated, i.e. that the radiation source 2 moves along a circular trajectory relative to the object or the examination zone 5. In other embodiments, the radiation source 2 and the examination zone 5 can move relative to each other along another trajectory.

The detection device 6 generates detection values, which depend on the radiation incident on the detection device 6, and the detection values are provided to an image generation device 10 for generating a spatially and temporally dependent image data set of the object, which is a moving object, like a human heart. The moving object is located, partly or completely, in a region of interest within the examination zone 5.

During the acquisition of the detection values, in this embodiment, an electrocardiograph 17, which is connected to a patient, generates an electrocardiogram, which contains values corresponding to the different moving phases of the human heart. The electrocardiogram is also provided to the image generation device 10. Also the electrocardiograph 17 is preferentially controlled by the control unit 9.

The image generation unit 10 generates a computed tomography image data set, which is a spatially and temporally dependent image data set, of the moving object by a reconstruction method well known to a person skilled in the art. For example, if the object is a heart, images of the heart can be reconstructed in different phases of the cardiac cycle, and by covering the complete cardiac cycle with reconstructions at equidistant phase points, a spatially and temporally dependent data set of the heart is generated. A more detailed description of the reconstruction of a spatially and temporally dependent data set, in particular for the reconstruction of different phases, is given in the above mentioned article by Manzke et al. and references therein.

The reconstructed image can finally be provided to a display unit 11 of the computed tomography apparatus 14.

In other embodiments, the apparatus 14 can comprise a moving value determination unit, which is not an electrocardiograph and which determines moving values, which correspond to the moving phases of the object. For example, the moving value determination unit can determine moving values based on the acquired detection values only, in particular by the so-called kymogram method, as it is for example disclosed in M. Kachelriess et al. "Kymogram detection and kymogram-correlated image reocntruction from subsecond spiral computed tomography scans of the heart " in Med. Phys., 29 (7), 2002, pp. 1489-1503.

The adaptive model and the spatially and temporally dependent image data set are provided to the adaptation unit 15 for adapting the adaptive model to the spatially and temporally dependent image data set. In this embodiment, the whole adaptive model is adapted to the spatially and temporally dependent image data set. In other embodiments, the adaptation unit 15 can be adapted for initially adapting at a point in time more than the defined region to the spatially and temporally dependent image data set, in particular, initially at a point in time the whole adaptive model can be adapted to the spatially and temporally dependent image data set, and the adaptation unit 15 is further adapted for adapting for a point in time of further points in time starting with an adaptive model, which has been adapted for a temporally adjacent point in time, only the defined region to the spatially and temporally dependent image data set. For example, if a four-dimensional image data set has been provided by the image data set providing unit 14, for different points in time *t*₀,*...,t_{N}* different sets of three-dimensional image data sets are present, i.e. at each of the points in time *t*₀,*...,t_{N}* a three-dimensional image data set is present. At the initial point in time *t*₀ more than the defined region, in particular the whole adaptive model, is adapted to the corresponding three-dimensional image data set and at the further points in time *t*₁,*...,t_{N}* a propagation is performed, wherein for adapting at a point in time *tᵢ* an adaptation only of the defined region to the three-dimensional image data set at this point in time *tᵢ* is performed and wherein it is started with an adaptive model, which has been adapted at a temporally adjacent point in time, *t*_{*i*-1} and/or *t*_{*i*+1}.

The adaptation unit 15 is preferentially adapted such that the adaptation is performed in the defined region with a larger resolution than in the remaining part of the adaptive object, if not only the defined region is adapted to the spatially and temporally dependent image data set. For example, if a multi-surface triangular model is used as an adaptive model, more triangular surfaces unit and/or smaller triangles can be used for adapting the adaptive model in the defined region to the spatially and temporally dependent image data set than for adapting other parts of the adaptive model to the spatially and temporally dependent image data set.

The adaptation unit can be adapted for using a shape-constrained deformable surface model approach as, for example, described in J. von Berg et al., "Multi-surface Cardiac Modelling, Segmentation, and Tracking", in A.F. Frangi, P.I. Radeva, A. Santos, and M. Hernandez, editors, LNCS 3504, Functional Imaging and Modelling of the Heart, pages 1-11, Springer Verlag, 2005, in particular for adapting a multi-surface model to a CT image. The model with given vertex positions is taken from a training image which served for the initialization of the initial mesh and as constraint during its adaptation. The number of triangles remained unchanged in this process. In the optimization scheme the vertex positions of the triangular surface mesh are the parameters to be varied. Mesh deformation is performed by minimizing the energy term E=Eₑₓₜ + α Eᵢₙₜ. The external energy Eₑₓₜ drives the mesh towards the surface points obtained in a surface detection step. The internal energy Eᵢₙₜ restricts the flexibility by maintaining the vertex configuration of a shape model. The parameter *α* weights the influence of both terms. A fixed number *n* of such minimization steps is performed on the mesh. A more detailed description is given in the above cited article by J. von Berg et al..

After the adaptive model has been adapted to the spatially and temporally dependent image data set by the adaptation unit 15, the adapted model is provided to the parameter determining unit 16.

The parameter determining unit 16 determines a parameter of the moving object depending on the spatially and temporally dependence of the defined region. For example, the parameter determining unit 16 can be adapted for determining a resting phase (best phase) of a certain sub-structure of the object, which might be a heart. If in an example the model is a surface model constituted of triangles, this determination can be performed by determining the displacement of all vertex points of the triangles of the model within the defined region with time and by determining for example the mean absolute displacement for each phase point, wherein the phase point with the smallest mean absolute displacement is the determined best phase point. Mean absolute displacements of a defined region of the model are preferentially calculated by calculating the mean absolute displacement of all vertices of the surface mesh between neighboring phase points being part of this defined region. Moreover, from this curve the maximum or minimum displacement along the cardiac cycle or the standard deviation along the temporal axis can be calculated.

Alternatively or in addition, in order to determine the intensity variation in a defined model region the mean absolute difference of all voxels enclosed by a defined region, which is preferentially a volume region, of the model is calculated. As a measure for the intensity change in the defined region, the mean difference of gray values inside the defined region between neighboring time stamps can be calculated. In addition, from this curve the slope along the time axis can be calculated or the maximum and minimum variation across a cardiac cycle.

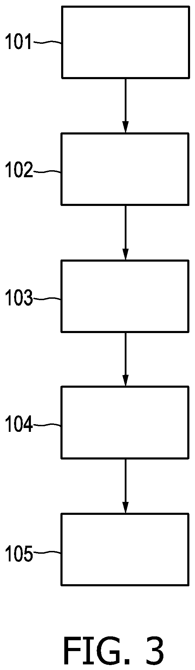

In the following an exemplary embodiment of a method for determining a parameter of a moving object in accordance with the invention will be described with reference to a flow chart shown in Fig. 3.

In step 101, an adaptive model of the object is provided by the adaptive model providing unit 12. In step 102, a user has the opportunity to define a region on the adaptive model by using the provided user interface 13. This definition of the region of the adaptive model can, for example, be performed by selecting one or several triangles using, for example, a mouse pointer of the user interface, if the adaptive model is a multi-surface triangular model. Alternatively, a user can select one of several adaptive models, on which a region has already been defined, or a user can select a certain condition, for example, a certain pathology to which a certain adaptive model with a defined region has been assigned, thereby defining a region on an adaptive model.

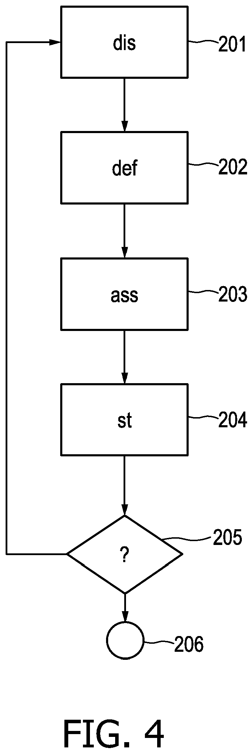

The adaptive model providing unit 12 can comprise already a set of several adaptive models with defined regions and preferentially also the conditions, in particular pathologies, which have been assigned to the several adaptive models. Alternatively or in addition, a set of these adaptive models with defined regions and assigned conditions can be generated by a user using the user interface 13. This will in the following be explained in more detail with respect to a flow chart shown in Fig. 4.

In step 201, a model of the moving object, for example, a multi-surface triangular model of a human heart, is displayed on the display unit of the user interface 13. A user can define a region on the adaptive model by using the user interface 13 in step 202, for example, by selecting one or several triangles of a multi-surface triangular model. Furthermore, in step 203 the user can assign a condition to the model with the region defined in step 202 and the model with the defined region together with the assigned condition is stored in the adaptive model providing unit 12 in step 204. In step 205, a user is asked if he wants to store a further adaptive model with a defined region and an assigned condition in the adaptive model providing unit 12 or not. If he wants to store a further adaptive model, step 201 will follow again. Otherwise, the storing of adaptive models with defined regions and assigned conditions in the adaptive model providing unit 12 will end in step 206.

In another embodiment, the user interface 13 is adapted such that a user can select, whether he wants to store several adaptive objects with defined regions together with an assigned condition or not. If a user selects that several adaptive objects with defined regions should be stored without an assignment to conditions, step 203 can be omitted.

Referring again to Fig. 3, in step 103 the image data set providing unit 14 provides a spatially and temporally dependent image data set of the moving object. In this embodiment, the image data set providing unit 14 is a computed tomography apparatus. The provision of a spatially and temporally dependent image data set of the moving object performed by the computed tomography apparatus will be described in the following.

Firstly, detection values and an electrocardiogram are acquired. For acquiring the detection values, the radiation source 2 rotates around the rotational axis R and the object is not moved, i.e. the radiation source 2 travels along a circular trajectory around the object. In another embodiment, the radiation source can move along another trajectory, for example, a helical trajectory, relative to the object. The radiation source emits radiation, in particular, polychromatic radiation, traversing the object at least in a region of interest, which contains, for example, a heart of a human patient. The radiation, which has passed the object, is detected by the detection device 6, which generates detection values. Simultaneously to the acquisition of the detection values, an electrocardiogram is acquired by the electrocardiograph 17. The detection values and the electrocardiogram are provided to the image generation device, which generates a spatially and temporally dependent image data set from the acquired detection values and the electrocardiogram.

In step 104, the adaptive model with the defined region and the provided image data set are provided to the adaptation unit 15, which adapts at least the defined region of the adaptive model to the spatially and temporally dependent image data set for determining the spatially and temporally dependence of the defined region. Preferentially, the whole adaptive model is adapted to the spatially and temporally dependent image data set. Alternatively, a part of the adaptive model, in particular only the defined region, can be adapted to the spatially and temporally dependent image data set.

In step 105, the adaptive model is provided to the parameter determining unit 16, which determines a parameter of the moving object depending on the spatially and temporally dependence of the defined region.

Although, in the above described embodiment, only one region has been defined on the adaptive model, in other embodiments, also more than one region can be defined on an adaptive model.

Although in the above description a surface of the adaptive model has been mentioned constructed of triangles, the adaptive model can also be constructed of other elements, for example, of areas having another shape, like a square shape.

Although the above described parameters determined by the parameter determining unit are directly related to the defined region, the parameter determining unit can also be adapted for determining the parameter of an element of the object, which is not a part of the adaptive model, but which is related to the defined region of the adaptive model. Such an element is, for example, an element, which is located close to the defined region and which moves therefore substantially together with the defined region. For example, a heart model must not contain the coronary arteries themselves, but when the outer heart surface is a part of the model and the defined region, which can be constituted of triangles of a surface mesh, is close to the model, the motion of the defined region also represents the motion of the coronaries, since they are anatomically connected. Thus, a parameter relating to the movement of the coronaries, like the best phase point, can be determined from the movement of the defined region.

Although in the above described embodiment only one parameter has been determined, in other embodiments, several parameters can be determined, which are related to the defined region of the adaptive model.

In the above described embodiment of a method for determining a parameter of a moving object steps 102 and 103 can also be performed before performing step 101, i.e. the image data set can also be provided before providing an adaptive model and before defining a region of the adaptive model. Furthermore, the above described step 102 can be performed after step 103 has been performed, i.e. the assignment of a condition to an adaptive model can be performed before defining a region of the adaptive model. Furthermore, if a predefined part of the adaptive model or if the whole adaptive model is adapted to the spatially and temporally dependent image data set, the definition of a region of the adaptive model can be performed at any time before determining the parameter of the moving object, because the parameter, which has to be determined, depends on the spatially and temporally dependence of the defined region. Also, if the adaptation of the adaptive model to the spatially and temporally dependent image data set has already been performed and if this adaptation is performed such that it is independent of the defined region, the parameter determining unit can determine the parameter of the moving object without adapting the adaptive object to the spatially and temporally dependent image data set again.

Although, in the above described embodiment, an electrocardiograph is used by the computed tomography apparatus, spatially and temporally dependent computed tomography image data set, i.e. a four-dimensional image data set, can also be reconstructed without having acquired an electrocardiogram. For example, moving values, which are related to the movement to the object, can also be retrieved from the detection values or measured by other means.

Although, in the above described embodiment, the moving object is preferentially a human heart, the moving object can also be any other moving object, for example, another human organ or a technical object. The display unit of the user interface 13 and the display unit 11 of the computed tomography apparatus can be the same.

The spatially and temporally dependent image data set can be a temporally dependent image data set with a two- or three-dimensional spatial dependence.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Calculations and determinations performed by one or several units or devices can be performed by any number of units or devices. For example, although in the above described embodiment the adaptation of the adaptive object to the image data set is performed by an adaptation unit and the determination of the parameter of the moving object is performed by the parameter determination unit, this adaptation and determination can be performed by a single unit or device. The method in accordance with the invention, in particular the calculations, determinations and/or the control of the different units and devices can be implemented as program code means of a computer program and/or as dedicated hardware.

A computer program may be stored/distributed on a suitable medium, such as an optical storage medium or solid state medium supplied together with or as part of other hardware, but may also be distributed in other forms such as via the internet or other wired or wireless telecommunication systems.

Any reference signs in the claims should not be construed as limiting the scope.

## Claims

1. An apparatus for determining a parameter of a moving object, the apparatus comprising:
- an adaptive model providing unit (12) for providing an adaptive model of the object,
- a user interface (13) for allowing a user to define a region of the adaptive model,
- an image data set providing unit (14) for providing a spatially and temporally dependent image data set of the moving object,
- an adaptation unit (15) for adapting at least a defined region of the adaptive model to the spatially and temporally dependent image data set for determining a spatially and temporally dependence of the defined region,
- a parameter determining unit (16) for determining the parameter of the moving object depending on the spatially and temporally dependence of the defined region.

2. The apparatus as defined in claim 1, wherein the adaptive model providing unit is adapted for providing several adaptive models, on which different regions are defined, wherein the user interface is adapted for allowing a user to define a region of the adaptive model by allowing a user to select at least one of the several adaptive models.

3. The apparatus as defined in claim 2, wherein the several adaptive models, on which different regions are defined, are assigned to several conditions, wherein the user interface is adapted for allowing a user to define a region of the adaptive model by allowing a user to select one of the several conditions.

4. The apparatus as defined in claim 2, wherein the user interface is adapted for allowing a user to define a region of an adaptive model and to store the adaptive model together with the defined region in the adaptive model providing unit.

5. The apparatus as defined in claim 2, wherein the user interface is adapted for allowing a user to assign a condition to an adaptive model, on which a region has been defined, wherein the adaptive model providing unit is adapted for storing the assigned condition.

6. The apparatus as defined in claim 1, wherein the adaptation unit is adapted for adapting the whole adaptive model to the spatially and temporally dependent image data set.

7. The apparatus as defined in claim 1, wherein the adaptation unit is adapted for initially adapting at a point in time more than the defined region to the spatially and temporally dependent image data set and for adapting for a point in time of further points in time starting with an adaptive model, which has been adapted for a temporally adjacent point in time, only the defined region to the spatially and temporally dependent image data set.

8. The apparatus as defined in claim 1, wherein the resolution of the adaptive model is larger in the defined region than in the remaining part of the adaptive model.

9. A method for determining a parameter of a moving object, the method comprising:
- providing (101) an adaptive model of the object by an adaptive model providing unit (12),
- providing (102) a user interface (13) for allowing a user to define a region of the adaptive model,
- providing (103) a spatially and temporally dependent image data set of the moving object by an image data set providing unit (14),
- adapting (104) at least a defined region of the adaptive model to the spatially and temporally dependent image data set for determining a spatially and temporally dependence of the defined region by an adaptation unit (15),
- determining (105) the parameter of the moving object depending on the spatially and temporally dependence of the defined region by a parameter determining unit (16).

10. A computer program for determining a parameter of a moving object, the computer program comprising program code means for causing an apparatus as defined in claim 1 to carry out the steps of the method as defined in claim 9, when the computer program is run on a computer controlling the apparatus.

## Patentansprüche

1. Vorrichtung zum Ermitteln eines Parameters eines sich bewegenden Objekts, wobei die Vorrichtung umfasst:
- eine Adaptivmodellbereitstellungseinheit (12) zur Bereitstellung eines adaptiven Modells des Objekts,
- eine Anwenderschnittstelle (13), um einem Anwender die Möglichkeit zu geben, einen Bereich des adaptiven Modells zu definieren,
- eine Bilddatensatzbereitstellungseinheit (14) zur Bereitstellung eines räumlich und zeitlich abhängigen Bilddatensatzes des sich bewegenden Objekts,
- eine Adaptionseinheit (15) zur Anpassung von zumindest einem definierten Bereich des adaptiven Modells an den räumlich und zeitlich abhängigen Bilddatensatz, um eine räumliche und zeitliche Abhängigkeit des definierten Bereichs zu ermitteln,
- eine Parameterermittlungseinheit (16) zur Ermittlung des Parameters des sich bewegenden Objekts je nach der räumlichen und zeitlichen Abhängigkeit des definierten Bereichs.

2. Vorrichtung nach Anspruch 1, wobei die Adaptivmodellbereitstellungseinheit so eingerichtet ist, dass sie mehrere adaptive Modelle bereitstellt, auf denen verschiedene Bereiche definiert sind, wobei die Anwenderschnittstelle so eingerichtet ist, dass sie es einem Anwender ermöglicht, einen Bereich des adaptiven Modells zu definieren, indem sie einen Anwender mindestens eines der mehreren adaptiven Modelle auswählen lässt.

3. Vorrichtung nach Anspruch 2, wobei die mehreren adaptiven Modelle, auf denen verschiedene Bereiche definiert sind, mehreren Zuständen zugeordnet werden, wobei die Anwenderschnittstelle so eingerichtet ist, dass sie einem Anwender die Möglichkeit gibt, einen Bereich des adaptiven Modells zu definieren, indem sie einen Anwender einen der mehreren Zustände auswählen lässt.

4. Vorrichtung nach Anspruch 2, wobei die Anwenderschnittstelle so eingerichtet ist, dass sie einem Anwender die Möglichkeit gibt, einen Bereich eines adaptiven Modells zu definieren und das adaptive Modell zusammen mit dem definierten Bereich in der Adaptivmodellbereitstellungseinheit zu speichern.

5. Vorrichtung nach Anspruch 2, wobei die Anwenderschnittstelle so eingerichtet ist, dass sie einem Anwender die Möglichkeit gibt, einem adaptiven Modell, auf dem ein Bereich definiert wurde, einen Zustand zuzuordnen, wobei die Adaptivmodellbereitstellungseinheit so eingerichtet ist, dass sie den zugeordneten Zustand speichert.

6. Vorrichtung nach Anspruch 1, wobei die Adaptionseinheit so eingerichtet ist, dass sie das gesamte adaptive Modell an den räumlich und zeitlich abhängigen Bilddatensatz anpasst.

7. Vorrichtung nach Anspruch 1, wobei die Adaptionseinheit so eingerichtet ist, dass sie zu einem Zeitpunkt mehr als den definierten Bereich an den räumlich und zeitlich abhängigen Bilddatensatz initial anpasst und für einen Zeitpunkt weiterer Zeitpunkte, beginnend mit einem adaptiven Modell, das für einen zeitlich benachbarten Zeitpunkt angepasst wurde, nur den definierten Bereich an den räumlich und zeitlich abhängigen Bilddatensatz anpasst.

8. Vorrichtung nach Anspruch 1, wobei die Auflösung des adaptiven Modells in dem definierten Bereich größer als in dem verbleibenden Teil des adaptiven Modells ist.

9. Verfahren zum Ermitteln eines Parameters eines sich bewegenden Objekts, wobei das Verfahren beinhaltet, dass:
- ein adaptives Modell des Objekts von einer Adaptivmodellbereitstellungseinheit (12) bereitgestellt wird (101),
- eine Anwenderschnittstelle (13) bereitgestellt wird (102), um einem Anwender die Möglichkeit zu geben, einen Bereich des adaptiven Modells zu definieren,
- ein räumlich und zeitlich abhängiger Bilddatensatz des sich bewegenden Objekts von einer Bilddatensatzbereitstellungseinheit (14) bereitgestellt wird (103),
- zumindest ein definierter Bereich des adaptiven Modells an den räumlich und zeitlich abhängigen Bilddatensatz angepasst wird (104), um mit Hilfe einer Adaptionseinheit (15) eine räumliche und zeitliche Abhängigkeit des definierten Bereichs zu ermitteln,
- der Parameter des sich bewegenden Objekts je nach der räumlichen und zeitlichen Abhängigkeit des definierten Bereichs mit Hilfe einer Parameterermittlungseinheit (16) ermittelt wird (105).

10. Computerprogramm zum Ermitteln eines Parameters eines sich bewegenden Objekts, wobei das Computerprogramm Programmcodemittel umfasst, um eine Vorrichtung nach Anspruch 1 zu veranlassen, die Schritte des Verfahrens nach Anspruch 9 auszuführen, wenn das Computerprogramm auf einem die Vorrichtung steuernden Computer abläuft.

## Revendications

1. Appareil de détermination d'un paramètre d'un objet mobile, l'appareil comprenant :
- une unité de fourniture de modèle adaptatif (12) pour fournir un modèle adaptatif de l'objet,
- une interface utilisateur (13) pour permettre à un utilisateur de définir une région du modèle adaptatif,
- une unité de fourniture d'ensemble de données d'image (14) pour fournir un ensemble de données d'image en fonction de l'espace et du temps de l'objet mobile,
- une unité d'adaptation (15) pour adapter au moins une région définie du modèle adaptatif à l'ensemble de données d'image en fonction de l'espace et du temps pour déterminer une dépendance de la région définie avec l'espace et le temps,
- une unité de détermination de paramètre (15) pour déterminer le paramètre de l'objet mobile en fonction de la dépendance de la région définie avec l'espace et le temps.

2. Appareil selon la revendication 1, dans lequel l'unité de fourniture de modèle adaptatif est adaptée pour fournir de multiples modèles adaptatifs sur lesquels différentes régions sont définies, dans lequel l'interface utilisateur est adapté pour permettre à un utilisateur de définir une région du modèle adaptatif en permettant à un utilisateur de sélectionner au moins l'un des multiples modèles adaptatifs.

3. Appareil selon la revendication 2, dans lequel les multiples modèles adaptatifs sur lesquels différentes régions sont définies, sont affectés à de multiples conditions, dans lequel l'interface utilisateur est adapté pour permettre à un utilisateur de définir une région du modèle adaptatif en permettant à un utilisateur de sélectionner l'une des multiples conditions.

4. Appareil selon la revendication 2, dans lequel l'interface utilisateur est adapté pour permettre à un utilisateur de définir une région d'un modèle adaptatif et de stocker le modèle adaptatif conjointement avec la région définie dans l'unité fournissant le modèle adaptatif.

5. Appareil selon la revendication 2, dans lequel l'interface utilisateur est adaptée pour permettre à un utilisateur d'affecter une condition à un modèle adaptatif, sur lequel une région a été définie, dans lequel l'unité de fourniture de modèle adaptatif est adaptée pour stocker la condition affectée.

6. Appareil selon la revendication 1, dans lequel l'unité d'adaptation est adaptée pour adapter la totalité du modèle adaptatif à l'ensemble de données d'images en fonction de l'espace et du temps.

7. Appareil selon la revendication 1, dans lequel l'unité d'adaptation est adaptée pour adapter initialement en un point du temps plus que la région définie à l'ensemble de données d'image en fonction de l'espace et du temps et pour adapter pour un point du temps d'autres points du temps en partant d'un modèle adaptatif, qui a été adapté pour un point du temps temporel adjacent, uniquement la région définie de l'ensemble de données d'image en fonction de l'espace et du temps.

8. Appareil selon la revendication 1, dans lequel la résolution du modèle adaptatif est plus grande dans la région définie que dans la partie restante du modèle adaptatif.

9. Procédé de détermination d'un paramètre d'un objet mobile, le procédé comprenant :
- la fourniture (101) d'un modèle adaptatif de l'objet par une unité de fourniture de modèle adaptatif (12),
- la fourniture (102) d'une interface utilisateur (13) pour permettre à un utilisateur de définir une région du modèle adaptatif,
- la fourniture (103) d'un ensemble de données d'image en fonction de l'espace et du temps de l'objet mobile par une unité de fourniture d'ensemble de données d'image (14),
- l'adaptation (104) d'au moins une région définie du modèle adaptatif à l'ensemble de données d'image en fonction de l'espace et du temps pour déterminer une dépendance à l'espace et au temps de la région définie par une unité d'adaptation (15),
- la détermination (105) du paramètre de l'objet mobile selon la dépendance à l'espace et au temps de la région définie par une unité de détermination de paramètre (16).

10. Programme informatique pour déterminer un paramètre d'un objet mobile, le programme informatique comprenant des moyens de code de programme pour amener un appareil tel que défini dans la revendication 1 à effectuer les étapes du procédé tels que définis dans la revendication 9, lorsque le programme informatique court sur un ordinateur commandant l'appareil.
